# EUROPÄISCHE PATENTSCHRIFT

(11) **EP 1 269 827 B1**
(45) Veröffentlichungstag und Bekanntmachung des Hinweises auf die Patenterteilung: **22.11.2006**
(21) Anmeldenummer: 02011348.6
(22) Anmeldetag: 23.05.2002
(51) Int. Cl.: A01F 15/07, A01F 15/18, B65G 39/071

(54) **Rundballenpresse**
Rotobaler
Presse à balles rondes

(30) Priorität: 19.06.2001 DE 20110054 U
(43) Veröffentlichungstag der Anmeldung: 02.01.2003
(73) Patentinhaber: Kverneland ASA, 4355 Kvernaland (NO)
(72) Erfinder: Ten Bult, H.T.H., 5531 Bladel (NL)
(74) Vertreter: Grünecker, Kinkeldey, Stockmair & Schwanhäusser Anwaltssozietät

(56) Entgegenhaltungen:
- EP-A- 0 566 204
- BE-A- 629 705
- DE-U- 7 513 533
- US-A- 5 213 202
- US-A- 5 911 304
- US-A- 5 941 168

## Beschreibung

Die Erfindung betrifft eine Rundballenpresse gemäß dem Oberbegriff des Anspruchs 1 oder des nebengeordneten Anspruchs 2.

In Rundballenpressen ist ein korrekter Riemenlauf der nebeneinander arbeitenden Pressriemen eine wesentliche Voraussetzung für die Betriebssicherheit der Presse und die Qualität der hergestellten Rundballen. Bei einer aus der EP-A-0 095 690 bekannten Rundballenpresse sind unter den Pressriemen auf der gemeinsamen Walze zylindrische Hülsen fest angebracht, deren axiale Breite geringer ist als die Pressriemenbreite. Die Längsmitte jeder Hülse ist an der Soll-Position platziert, an der die Mitte des Pressriemens im Betrieb laufen soll. Zusätzlich ist eine rechenartige Führungseinrichtung vorgesehen, die mit Zinken zwischen die beabstandeten Pressriemen eingreift und diese führt. Das Einhalten der Soll-Positionen bzw. Einstellen eines korrekten Riemenlaufs soll das bekannte Phänomen der Selbstzentrierung der elastischen Pressriemen auf ihren Hülsen gewährleisten, was jedoch häufig nur theoretisch funktioniert, weil im praktischen Betrieb einzelne Pressriemen in der Gruppe eine Querverlaufstendenz entwickeln und im Lauf eine zu einer Seite versetzte Fehlerposition einnehmen. Der seitlich verlaufende Pressriemen kontaktiert dann entweder eine Zinke der Führungseinrichtung oder den Randbereich des benachbarten Pressriemens, wodurch es zu Randschäden kommt. Ferner vergrößert sich der vorbestimmte Zwischenabstand an der anderen Seite, so dass Erntegut durchfällt oder sich verwickelt. Es ist deshalb üblich, wenigstens eine Korrekturwalze vorzusehen, die mit einer Hilfseinrichtung kippverstellt wird, um eine Riemenlaufkorrektur zu bewirken. Diese Maßnahme bedeutet nur einen Kompromiss, da der am stärksten verlaufende Pressriemen nicht vollständig in die Soll-Position gebracht werden kann, hingegen andere, an sich korrekt laufende Pressriemen aufgrund der Korrekturmaßnahme querverlaufen.

Der Erfindung liegt die Aufgabe zugrunde, eine Rundballenpresse anzugeben, bei der der Pressriemenlauf individuell beeinflussbar ist, um alle Pressriemen im Betrieb in ihren Soll-Positionen auf der gemeinsamen Walze zu halten.

Die gestellte Aufgabe wird erfindungsgemäß entweder mit den Merkmalen des Anspruchs 1 oder den Merkmalen des Anspruchs 2 gelöst. Ferner lässt sich die gestellte Aufgabe auch durch eine Kombination der Merkmale der Ansprüche 1 und 2 lösen.

Durch die unter dem jeweils eine Verlaufabweichungstendenz entwickelnden Pressriemen relativ zur Soll-Position und entgegengesetzt zur Richtung der Verlaufabweichungstendenz versetzte, asymmetrische Korrekturposition der auftragenden Auflage wird der bekannte Effekt der Selbstzentrierung eines Pressriemens auf einer Erhöhung der Walzenoberfläche auf neue Weise eingesetzt, um im Betrieb bei laufendem Pressriemen aus dessen Laufbewegung und dessen Auflagedruck eine der Verlaufabweichungstendenz entgegengesetzte Korrekturkraft zu erzeugen. Auf diese Weise wird der Pressriemen in die Soll-Position gezwungen. Die Soll-Position ist dann das Resultat eines Gleichgewichts zwischen der Verlaufabweichungstendenz und der Korrekturkraft ist. D.h., der Pressriemen läuft nicht, wie üblich, symmetrisch auf der Auflage, sondern asymmetrisch. Die Auflage ist so gestaltet, z.B. durch ihre Höhe, ihre Reibeigenschaft, ihre axiale Breite und die eingestellte asymmetrische Korrekturposition, dass sie im Pressriemen permanent die der Verlaufabweichungstendenz entgegengesetzt gerichtete Korrekturkraft in nur einer Richtung im Pressriemen erzeugt. Mit anderen Worten wird in Abkehr vom bekannten Prinzip, mit der Auflage unter dem Pressriemen Selbstzentrierungskräfte in beiden axialen Richtungen zu erzeugen, die Auflage asymmetrisch platziert, um die Korrekturkraft nur in einer Richtung zu erzeugen. Diese bei dem eine Verlaufabweichungstendenz entwickelnden Pressriemen vorgesehene individuell auf die Verlaufabweichungstendenz abgestimmte Maßnahme, beeinflusst den Riemenlauf der anderen Pressriemen nicht. Alle Pressriemen halten ihre Soll-Positionen ein.

Auch mit den wenigstens zwei Zonen mit voneinander verschiedenen Reibeigenschaften im Kontaktbereich zwischen dem Pressriemen und der Walze wird permanent aus dem gegenseitigen Kräfte- und Energieaustausch zwischen dem Pressriemen und der Walze eine der Verlaufabweichungstendenz entgegengesetzte Korrekturkraft erzeugt, die mit der Anordnung und Ausbildung der Zonen exakt so eingestellt wird, dass sie der die Verlaufabweichungstendenz bewirkenden Störkraft dann das Gleichgewicht hält, wenn der Pressriemen exakt in der Soll-Position läuft.

In beiden Fällen wird bewusst eine entweder gegenständliche oder mit den Reibeigenschaften eingestellte physikalische Asymmetrie im Kontaktbereich zwischen dem Pressriemen und der Walze nach Maßgabe der sich entwickelnden Verlaufabweichungstendenz des Pressriemens vorgesehen.

Diese beiden Asymmetrien können auch kombiniert werden.

Auf diese Weise lässt sich der Riemenlauf individuell an jedem Pressriemen präzise einstellen, ohne aufwendige Hilfsmaßnahmen assistieren zu lassen und ohne die Walze selbst zu verstellen. Dies setzt natürlich voraus, zunächst die Pressriemen im Betrieb zu beobachten und dann erst die passenden Korrekturmaßnahmen vorzusehen, wenn ein Pressriemen eine Verlaufabweichungstendenz entwickelt. Dies kann beispielsweise im Rahmen der Endabnahme der Rundballenpresse beim Hersteller durchgeführt werden, oder später im Zuge einer Maschinenwartung.

Zweckmäßig ist die Korrekturposition der Auflage bzw. die axiale Position wenigstens einer Zone der Zonen mit unterschiedlichen Reibeigenschaften zumindest einmal einstellbar. Dies ermöglicht eine Riemenlauf-Korrektur für den Fall, dass eine Grundeinstellung nicht mehr passen sollte. Der Vorgang kann mittels den Lauffehler feststellender Sensoren und von diesen gesteuerter Auflagen oder Reibmittel auch automatisiert werden.

Alternativ oder additiv kann die axiale Breite der Auflage oder jeder Zone zumindest einmal eingestellt werden, um den Riemenlauf individuell zu korrigieren.

Bei der Auflage bietet es sich an, die Auflage in Stufen oder stufenlos auf der Oberfläche der Walze zu verstellen. Hierzu können übliche Hilfseinrichtungen vorgesehen sein. Denkbar ist es auch, die Auflage als Hülse mit Befestigungselementen an der Walze festzulegen und zu Korrekturen die Befestigungselemente zu lösen, die Hülse zu verstellen und die Befestigungen wieder anzuziehen. Im Grunde kann eine Auflage in der richtigen Breite mit zweckmäßiger Struktur ausreichen, um durch sie in der richtig eingestellten asymmetrischen Korrekturposition den korrekten Riemenlauf zu erzielen. Dies schließt jedoch nicht aus, auch mehrere Auflagen, z.B. in Form von Ringen, unter dem Pressriemen asymmetrisch zur Soll-Position zu gruppieren.

Die Kontaktoberfläche der Auflage kann frei gestaltet werden. Sie kann eben und parallel zur Walzenoberfläche sein, oder bombiert bzw. trapezförmig oder dachförmig oder dreieckförmig. Sie kann auch durch einen Wulst definiert sein. Ferner kann die Kontaktoberfläche glatt oder strukturiert sein, um mit dem Pressriemen in gewünschter Weise zu kooperieren. Die Kontaktoberfläche kann auch schräg ansteigend oder schräg abfallend gestaltet sein.

Bequem ist es, die Auflage als Kunststoff-, Metall- oder Gummihülse auszubilden, die auf die Walze aufgezogen und in der asymmetrischen Korrekturposition festgelegt wird.

Um bei einer individuellen Korrektur des Riemenlaufs nicht die Walze ausbauen und die Pressriemen entfernen zu müssen, ist es zweckmäßig, die Auflage aus einem endlichen Streifen zu bilden, der an der Walzenoberfläche angehaftet wird. Dabei kann der Streifen die Oberfläche der Walze voll umschließen, oder gegebenenfalls nur einen Teilbereich der Oberfläche. Es ist auch denkbar, in Umfangsrichtung mit Zwischenabständen versetzt mehrere einzelne Streifenstücke anzubringen.

Als besonders praktikabel hat sich ein Streifen in Form eines Klebebandes mit vorzugsweise reibungsaktiver Kontaktoberfläche erwiesen. Ein solches Klebeband wird beispielsweise zur Trittsicherung an Treppenstufen eingesetzt und ist in unterschiedlichen Spezifikationen und Stärken handelsüblich und kostengünstig erhältlich. Dabei reicht eine Streifenstärke von wenigen Zehntel Millimetern bis mehreren Millimetern für den gewünschten Effekt aus, da vordringlich die Reibungsaktivität der Kontaktoberfläche für den Effekt verantwortlich ist. Bei der Lösung mit den Zonen unterschiedlicher Reibeigenschaften können diese unterschiedlichen Reibeigenschaften entweder an der Walzenoberfläche oder an der Pressriemenunterseite oder sogar an beiden vorgesehen sein.

In einem Fall resultieren die unterschiedlichen Reibeigenschaften in den Zonen aus unterschiedlichen Oberflächenbehandlungsverfahren der Walzenoberfläche. Beispielsweise ist eine Zone aufgeraut oder auf andere Weise behandelt, während die andere Zone die übliche Walzenoberflächenqualität hat.

Die unterschiedlichen Reibeigenschaften lassen sich bequem auch durch einen haftenden Auftrag oder verschiedene Aufträge auf der Walzenoberfläche und/oder der Riemenunterseite erzielen. Dabei kann so vorgegangen werden, dass die höhere Reibungswirkung einer Zone zum Ziehen des Pressriemens entgegengesetzt zur Störkraft eingesetzt wird, oder eine Zone mit verminderter Reibeigenschaft sozusagen zum Schieben des Pressriemens entgegengesetzt zur Störkraft. In jedem Fall wird durch die vorbestimmte Asymmetrie der Störkraft permanent entgegengewirkt. So ist es beispielsweise möglich, den Pressriemen an der Verlaufsseite sozusagen etwas gleitfreundlicher zu behandeln oder zu schmieren, damit er zur anderen Seite gezogen wird, wo er und/oder die Walzenoberfläche griffiger ist.

Die Anwendung unterschiedlicher Reibeigenschaften ist besonders bei angetriebenen Walzen sinnvoll.

Anhand der Zeichnung werden Ausführungsformen des Erfindungsgegenstandes erläutert. Es zeigen:
- Fig. 1: schematisch einen Teil eines Pressraumes einer Rundballenpresse mit mehreren, an einer gemeinsamen Walze umgelenkten, angetriebenen Pressriemen, in ihren Soll-Positionen,
- Fig. 2: eine asymmetrisch positionierte Auflage auf der Walze zur individuellen Korrektur einer Verlaufabweichungstendenz eines Pressriemens,
- Fig. 3: schematisch anhand von Querschnitten unterschiedliche ausgebildete Auflagen als eine nicht beschränkende Auswahl aus verschiedenen Möglichkeiten,
- Fig. 4: eine weitere Ausführungsform mit einem Klebeband,
- Fig. 5: eine weitere Ausführungsform mit an der Walzenoberfläche vorgesehenen Zonen verschiedener Reibeigenschaften,
- Fig. 6: eine weitere Ausführungsform mit an der Pressriemenunterseite vorgesehenen Zonen verschiedener Reibeigenschaften, und
- Fig. 7: eine weitere Ausführungsform ebenfalls mit Zonen unterschiedlicher Reibeigenschaften an der Unterseite des individuell in seinem Riemenlauf zu korrigierenden Pressriemens.

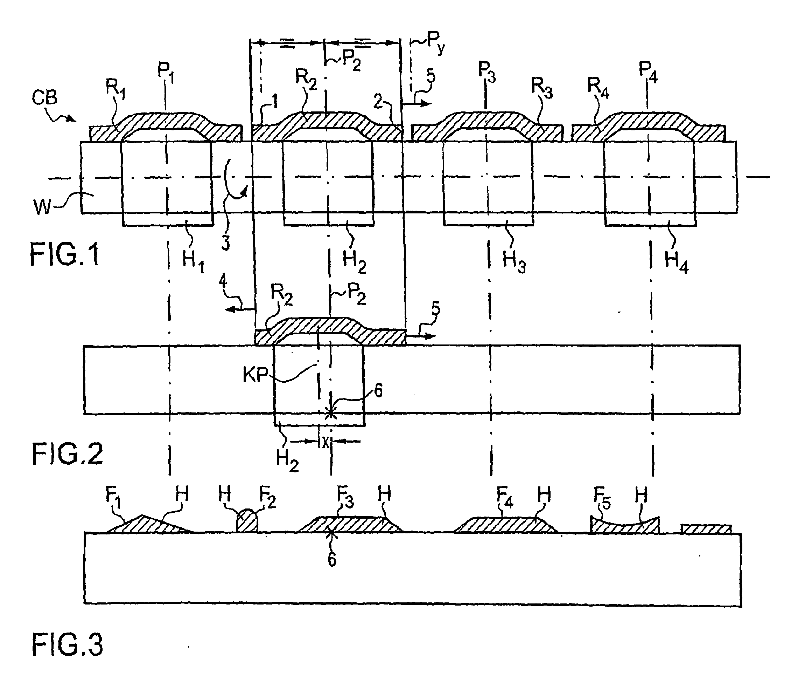

In einer nicht gezeigten Rundballenpresse ist ein Pressraum CB durch mehrere nebeneinander laufende Pressriemen R1 bis R4 in Umfangsrichtung begrenzt. Die Pressriemen R1 bis R4 sind flexibel und laufen im Wesentlichen parallel zueinander mit schmalen Zwischenabständen. Die Pressriemen R1 bis R4 werden an Walzen W umgelenkt, wobei in Fig. 1 eine Walze W gezeigt ist, die gegebenenfalls angetrieben ist (Pfeil 3). Jeder Pressriemen R1 bis R4 soll im Betrieb an einer vorbestimmten Soll-Position P1 bis P4 laufen, die durch eine gestrichelte Linie angedeutet ist, die beispielsweise zusammenfällt mit der Längsmitte des jeweiligen Pressriemens R1 bis R4. Auf der Walze W sind auftragende Auflagen H1 bis H4 unter den jeweiligen Pressriemen R1 bis R4 angeordnet, die bei dem gezeichneten Ausführungsbeispiel schmaler als die Pressriemen mit ihren jeweiligen Seitenrändem 1, 2 sind. Die Auflagen H1 bis H4 sind mit ihren Mitten auf die Soll-Positionen P1 bis P4 einjustiert, so dass die Pressriemen R1 bis R4 durch die mechanische Zusammenarbeit und dem Phänomen der Selbstzentrierung auf einer solchen Erhöhung genau in der Soll-Position P1 bis P4 laufen müssten. Dies ideale Situation ist in Fig. 1 dargestellt.

Durch äußere Einflüsse, beispielsweise Unterschiede zwischen den Pressriemen R1 bis R4, entwickelt in Fig. 1 der Pressriemen R2 eine Verlaufsabweichungstendenz nach rechts, d.h., er wird durch eine Störkraft 5 in Richtung nach rechts dazu veranlasst, aus der Soll-Position P2 zu verlaufen und im Betrieb eine Fehlerposition Py einzunehmen, in der er seinen Zwischenabstand zum benachbarten Pressriemen 3 verkleinert und gegebenenfalls den Pressriemen R3 mit seinem Rand 2 berührt, und gleichzeitig den Zwischenabstand zum anderen Pressriemen R1 unzulässig vergrößert. Diese Verlaufsabweichungstendenz ist eine individuelle Eigenart dieses Pressriemens R2 und kann durch die Auflage H2 nicht beseitigt werden, d.h., der Pressriemen R2 würde trotz der in der Soll-Position P2 angeordneten Auflage H2 nach rechts verlaufen.

Erfindungsgemäß ist in Fig. 2 die Auflage H2 in eine bezüglich der Soll-Position P2 des Pressriemens R2 nach links um das Maß x versetzte Korrekturposition KP eingesetzt, um durch den Selbstzentrierungseffekt, der sich zwischen einem flexiblen Pressriemen und einer Erhöhung auf der Walzenoberfläche aus mechanischen Gründen einstellt, so auszunutzen, dass eine Korrekturkraft 4 bzw. ein Korrekturmoment im Betrieb entwickelt wird, die bzw. das durch die Versetzung X zwischen der Korrekturposition KP und der Soll-Position P2 gerade so stark ist, dass die Korrekturkraft sich mit der Störkraft 5 das Gleichgewicht hält, wenn der Pressriemen R2 in der Soll-Position P2 läuft, d.h. mit seiner Längsmitte in der Soll-Position P2 bleibt. Schematisch ist in Fig. 2 bei 6 angedeutet, dass die Auflage H2, die beispielsweise eine Hülse aus Kunststoff, Gummi oder Metall oder auch anderen Materialien sein kann, in der Korrekturposition KP sogar einstellbar festgelegt ist.

In Fig.3 sind unterschiedliche Ausführungsformen für solche auftragenden Auflagen H gezeigt. Ganz links ist die Auflage H mit einer dachförmigen Kontaktoberfläche F1 gestaltet. Im zweiten Beispiel ist ein wulstartiger Ring mit einer stark bombierten Kontaktoberfläche F2 vorgesehen. Im dritten Fall hat die Auflage H, die mit Madenschrauben 6 an der Oberfläche der Walze fixiert wird, eine trapezartige, zweckmäßigerweise an den Ecken gerundete, Kontaktoberfläche F3. Im vierten Fall ist die Kontaktoberfläche F4 der Auflage H konvex bombiert. Im fünften Fall verläuft entsprechend Fig. 2 die Kontaktoberfläche F5 parallel zur Oberfläche der Walze.

Die Kontaktoberfläche könnte auch zur einen oder anderen Seite schräg abfallen. Die jeweilige Kontaktoberfläche kann glatt sein oder strukturiert oder so ausgerüstet, dass sie eine besondere Griffigkeit entwickelt oder mit der Unterseite des Pressriemens in besonders innigen Wirkkontakt tritt.

Die Pressriemen R1 bis R4 könnten auch direkt auf der Walzenoberfläche 7 laufen. Nur unter dem eine Querverlaufabweichungstendenz entwickelnden Pressriemen, z.B. R2, wird dann eine Auflage H2 in der Korrekturposition PK platziert.

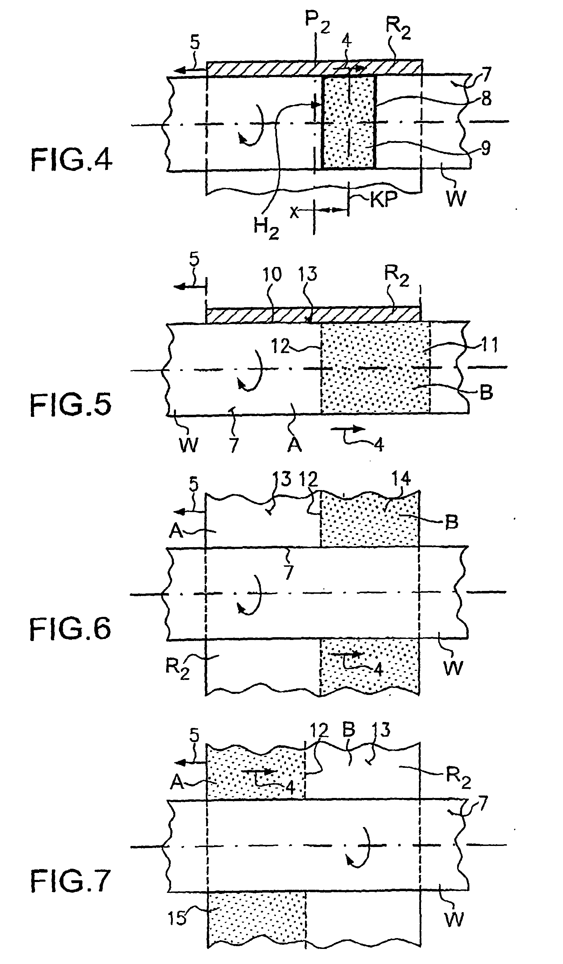

In Fig. 4 ist der Pressriemen R2 auf der Walze W mit einer Verlaufabweichungstendenz aus der Soll-Position P2 nach links in Richtung des Pfeils 5 (Störkraft) dargestellt. Der Pressriemen R2 wird jedoch in der Soll-Position P2 gehalten, weil auf der Walzenoberfläche 7 die Auflage H2 mit der Versetzung x gegenüber der Soll-Position P2 in der Korrekturposition KP platziert ist. Die Auflage H2 ist beispielsweise ein endlicher selbstklebender Streifen 8 mit einer reibungsaktiven Oberfläche 9. Durch Abstimmen der Reibungseigenschaft der Oberfläche 9, der axialen Breite des Streifens 8 und der Versetzung X auf die Störkraft 5, wird im Betrieb die Korrekturkraft 4 entwickelt, die der Störkraft 5 entgegengesetzt ist und ihr das Gleichgewicht hält, wenn der Pressriemen R2 in der Sollposition P2 läuft. Eine Dicke von wenigen Zehntel bis einigen Millimetern reicht für den Streifen 8 aus. Beispielsweise ist dies ein Klebestreifen, wie er zur Trittsicherheitsverbesserung an Treppenstufen verwendet wird und handelsüblich ist. Der Streifen 8 kann die Oberfläche 7 voll umfassen, oder auch nur einen begrenzten Umfangsabschnitt abdecken. Ferner ist es möglich, nur einzelne Streifenstücke mit Zwischenabständen anzubringen.

In Fig. 5 wird der Riemenlauf des durch die Störkraft 5 eine Verlaufabweichungstendenz entwickelnden Pressriemens R2 durch mindestens zwei Zonen A, B mit voneinander verschiedenen Reibeigenschaften auf der Oberfläche 7 der Walze W korrigiert. Beispielsweise ist die Zone B durch Aufrauen oder Beschichten der Walzenoberfläche 7 mit besserer Reibeigenschaft ausgebildet, als die Zone A, in der beispielsweise die normal bearbeitete Oberfläche 7 der Walze W vorliegt. Innerhalb des mit 10 angedeuteten Kontaktbereiches zwischen dem Pressriemen R2 und der Walzenoberfläche 7 ist die asymmetrisch platzierte Zone B vorgesehen, mit der der Pressriemen im Betrieb so zusammenwirkt, dass die Korrekturkraft 4 entwickelt wird, die der Störkraft 5 dann das Gleichgewicht hält, wenn der Pressriemen R2 in der Sollposition läuft.

In Fig. 6 ist an der mit 13 bezeichneten Unterseite des Pressriemens R2 eine Zone B mit besseren Reibeigenschaften und eine Zone A mit schlechteren Reibeigenschaften vorgesehen, um die Korrekturkraft 4 zu entwickeln, die der Störkraft 5 in der Soll-Position P2 das Gleichgewicht hält. Die Zone B ist beispielsweise durch eine klebrige oder griffige Beschichtung oder Aufrauung 14 der Pressriemenunterseite 13 gebildet

Die Maßnahmen der Fig. 5 und 6 können auch in Kombination angewendet sein.

In Fig. 7 wird die Korrekturkraft 4, die der Störkraft 5 in der Sollposition des Pressriemens R2 das Gleichgewicht hält, dadurch entwickelt, dass wiederum mindestens zwei Zonen A, B mit voneinander verschiedenen Reibeigenschaften an der Unterseite 13 des Pressriemens R2 vorgesehen sind, während die Oberfläche 7 der Walze durchgehend die gleiche Reibeigenschaft hat. In diesem Fall ist die Zone A mit schlechteren Reibeigenschaften ausgebildet, beispielsweise geglättet oder mit einem weniger reibenden Belag oder Auftrag versehen, sozusagen geschmiert, so dass die nicht oder anders behandelte Zone B die stärkere Reibung entwickelt und der Pressriemen R2 nicht nach rechts gezogen, sondern sozusagen nach rechts geschoben wird. In der Zone A ist ein Belag 15 an der Unterseite 13 punktiert angedeutet. Zwischen den Zonen A, B kann es einen definierten Übergang 12 geben. Die axialen Breiten der Zonen A, B, die jeweiligen Reibeigenschaften und auch die Position des Übergangs 12 bestimmen die Stärke der Korrekturkraft 4. Diese Parameter werden in Abstimmung auf die Verlaufabweichungstendenz des Pressriemens R2 individuell eingestellt, um den Pressriemen R2 in der Soll-Position laufen zu lassen.

Die Auflage kann auch ebenso breit oder sogar etwas breiter sein als der zugehörige Riemen; in diesem Fall muss der Riemen zur Auflage seitlich versetzt laufen, so dass er seitlich über die Auflage vorsteht und dort auf einem kleinen Radius verläuft.

Anstelle einzelner Auflagen kann die Walze auch mit einem leicht bearbeitbaren Belag versehen werden, der ursprünglich eine über die Walzenlänge gleichbleibende Dicke aufweist und in den Bereichen, in denen eine Laufkorrektur vorgenommen werden soll, so abgetragen wird, dass der stehen bleibende Rest wie eine "Auflage" im beschriebenen Sinn wirkt.

Bei der Erfindung handelt es sich in allgemeiner Form um ein Verfahren zum Korrigieren von Verlaufsabweichungstendenzen von Pressriemen in Rundballenpressen, die nebeneinander mit Zwischenabständen um gemeinsame, drehbare, insbesondere angetriebene Walzen umgelenkt werden, wobei zur Laufkorrektur eines relativ zu den auf der Walze benachbarten Pressriemen seitlich in eine Fehlerposition tendierenden Pressriemens in seine Sollposition der Umschlingungs-Anlagebereich zwischen Walze und Pressriemen bezüglich der Sollposition hinsichtlich des durchschnittlichen Durchmessers der Walze innerhalb des Pressriemens oder - namentlich bei angetriebenen Walzen - hinsichtlich des durchschnittlichen Reibwerts zwischen Pressriemenunterseite und Walzenoberfläche asymmetrisch in der Weise gestaltet wird, dass infolge des Umlaufs analog zu den Selbstzentrierungskräften Rückstellkräfte entstehen, die der Tendenz des Pressriemens in die Richtung der Fehlerposition entgegenwirken.

## Patentansprüche

1. Rundballenpresse mit einem eine Vielzahl umlaufend angetriebener Pressriemen (R1 bis R4) aufweisenden Pressraum (CB), in dem die Pressriemen (R1 bis R4) nebeneinander mit Zwischenabständen an jeweils gemeinsamen, drehbar abgestützten Walzen (W) umgelenkt werden, **dadurch gekennzeichnet, dass** zum Rückführen wenigstens eines relativ zu den auf der Walze (W) benachbarten Pressriemen (R1, R3) eine Verlaufabweichungstendenz zu einer quer versetzten Fehlerposition (Py) aufweisenden Pressriemens (R2) in eine Soll-Position (P2) auf der Walzenoberfläche (7) unter dem Pressriemen (R2) wenigstens eine auftragende Auflage (H2) angeordnet ist, die eine in Axialrichtung der Walze (W) relativ zur Soll-Position (P2) zur der Richtung der Verlaufsabweichungstendenz (5) entgegengesetzten Richtung (4) versetzte asymmetrische Korrekturposition (KP) einnimmt.

2. Rundballenpresse mit einem eine Vielzahl umlaufend angetriebener Pressriemen (R1 bis R4) aufweisenden Pressraum (CB), wobei die Pressriemen nebeneinander mit Zwischenabständen an jeweils gemeinsamen, drehbar abgestützten Walzen (W) umgelenkt werden, **dadurch gekennzeichnet, dass** zum erzwungenen Rückführen wenigstens eines relativ zu den auf der Walze (W) benachbarten Pressriemen (R1, R3) eine Verlaufsabweichungstendenz zu einer querversetzten Fehlerposition (Py) aufweisenden Pressriemens (R2) in eine Soll-Position (P2) innerhalb der axial gesehenen Breite des Kontaktbereichs (7, 13) zwischen dem Pressriemen (R2) und der Walze (W) wenigstens zwei Zonen (A, B) einer physikalischen Asymmetrie durch verschiedene Reibeigenschaften vorgesehen sind.

3. Rundballenpresse nach Anspruch 1 oder 2, **dadurch gekennzeichnet, dass** die asymmetrische Korrekturposition (KP) der Auflage (H2) bzw. die axiale Position wenigstens einer Zone (A, B) zumindest einmal einstellbar ist.

4. Rundballenpresse nach Anspruch 1 oder 2, **dadurch gekennzeichnet, dass** die axiale Breite der Auflage (H2) oder wenigstens einer Zone (A, B) zumindest einmal einstellbar ist.

5. Rundballenpresse nach Anspruch 3, **dadurch gekennzeichnet, dass** die Auflage (H2) in Stufen oder stufenlos entlang der Oberfläche (7) der Walze (W) verstellbar ist.

6. Rundballenpresse nach Anspruch 1, **dadurch gekennzeichnet, dass** die Auflage (H2) eine zur Walzenoberfläche (7) parallele oder relativ zur Walzenoberfläche (7) schräge, ebene, konvex bombierte, trapezförmige, dachförmige oder dreieckförmige Kontaktoberfläche (F1 bis F5) für den Pressriemen (R2) aufweist, die glatt oder strukturiert oder physikalisch griffig ist.

7. Rundballenpresse nach Anspruch 1, **dadurch gekennzeichnet, dass** die Auflage (H2) eine Kunststoff-, Metall- oder Gummi-Hülse ist.

8. Rundballenpresse nach Anspruch 1, **dadurch gekennzeichnet, dass** die Auflage (H2) wenigstens ein endlicher, an der Walzenoberfläche (7) angehafteter Streifen (8) ist.

9. Rundballenpresse nach Anspruch 8, **dadurch gekennzeichnet, dass** der Streifen (8) ein Klebeband ist.

10. Rundballenpresse nach Anspruch 9, **dadurch gekennzeichnet, dass** das Klebeband eine reibungsaktive Kontaktoberfläche (9) hat.

11. Rundballenpresse nach Anspruch 2, **dadurch gekennzeichnet, dass** die Zonen (A, B) an der Walzenoberfläche (7) und/oder an der Pressriemen-Unterseite (13) vorgesehen sind.

12. Rundballenpresse nach Anspruch 11, **dadurch gekennzeichnet, dass** die voneinander verschiedenen Reibeigenschaften der Zonen (A, B) von unterschiedlichen Oberflächenbehandlungen der Walzenoberfläche (7) stammen.

13. Rundballenpresse nach Anspruch 11, **dadurch gekennzeichnet, dass** zumindest in einer Zone (A oder B) ein haftender Auftrag (11, 15) vorgesehen ist, und dass der Auftrag (11, 15) entweder bessere oder schlechtere Reibeigenschaften hat als die andere Zone (B oder A).

14. Rundballenpresse nach einem der Ansprüche 1 bis 13, **dadurch gekennzeichnet, dass** die Abweichung der Ist-Position von der Soll-Position selbsttätig erfassbar und die Auflage bzw. die zwei Zonen selbsttätig im Korrektursinn beeinflussbar sind.

## Claims

1. Roll baler having a pressing chamber (CB), which includes a plurality of circumferentially driven pressing belts (R1 to R4), in which pressing chamber the pressing belts (R1 to R4) are guided alongside one another, with intermediate spacings therebetween, on respectively common, rotatably supported rollers (W), **characterised in that**, for the return guidance of at least one pressing belt (R2), which has a trend deviation tendency towards a transversely offset error position (Py) relative to the adjacent pressing belt (R1, R3) on the roller (W), into a desired position (P2) on the roller surface (7), at least one bearing support (H2) is disposed beneath the pressing belt R2, which support assumes an asymetrical correction position (KP), which is offset from the direction (4) opposed to the direction of the trend deviation tendency (5) when viewed in the axial direction of the roller (W) relative to the desired position (P2).

2. Roll baler having a pressing chamber (CB), which includes a plurality of circumferentially driven pressing belts (R1 to R4), the pressing belts being guided alongside one another, with intermediate spacings therebetween, on respectively common, rotatably supported rollers (W), **characterised in that**, for the forced return guidance of at least one pressing belt (R2), which has a trend deviation tendency towards a transversely offset error position (Py) relative to the adjacent pressing belts (R1, R3) on the roller (W), into a desired position (P2) within the axially viewed width of the contact region (7, 13) between the pressing belt (R2) and the roller (W), at least two zones (A, B) of a physical asymmetry are provided because of different frictional properties.

3. Roll baler according to claim 1 or 2, **characterised in that** the asymmetric correction position (KP) of the support (H2) or respectively the axial position of at least one zone (A, B) is adjustable at least once.

4. Roll baler according to claim 1 or 2, **characterised in that** the axial width of the support (H2) or of at least one zone (A, B) is adjustable at least once.

5. Roll baler according to claim 3, **characterised in that** the support (H2) is displaceable in steps or steplessly along the surface (7) of the roller (W).

6. Roll baler according to claim 1, **characterised in that** the support (H2) has a flat, convexly curved, trapezoidal, roof-shaped or triangular contact surface (F1 to F5) for the pressing belt (R2), which contact surface is parallel to the roller surface (7) or is inclined relative to the roller surface (7), and which contact surface is smooth or structured or physically non-slip.

7. Roll baler according to claim 1, **characterised in that** the support (H2) is a plastics material, metal or rubber sleeve.

8. Roll baler according to claim 1, **characterised in that** the support (H2) is at least one continuous strip (8) adhered to the roller surface (7).

9. Roll baler according to claim 8, **characterised in that** the strip (8) is an adhesive tape.

10. Roll baler according to claim 9, **characterised in that** the adhesive tape has a frictionally active contact surface (9).

11. Roll baler according to claim 2, **characterised in that** the zones (A, B) are provided on the roller surface (7) and/or on the pressing belt underside (13).

12. Roll baler according to claim 11, **characterised in that** the frictional properties of the zones (A, B), which differ from one another, originate from various surface treatments of the roller surface (7).

13. Roll baler according to claim 11, **characterised in that** an adhesive coating (11, 15) is provided at least in one zone (A or B), and **in that** the coating (11, 15) has either better or worse frictional properties than the other zone (B or A).

14. Roll baler according to one of claims 1 to 13, **characterised in that** the deviation of the actual position from the desired position is automatically detectable, and the support or respectively the two zones can be automatically influenced in the correction direction.

## Revendications

1. Presse à balles cylindriques comportant une chambre de formation des balles (CB), munie d'une pluralité de courroies de compactage (R1 à R4) entraînées en rotation, dans laquelle les courroies de compactage (R1 à R4), disposées les unes à côté des autres en laissant une distance intermédiaire, sont guidées autour de cylindres (W) respectivement communs, montés rotatifs, **caractérisée en ce que**, pour le guidage d'au moins une courroie de compactage (R2), présentant par rapport aux courroies de compactage (R1, R3) adjacentes sur le cylindre (W) une tendance de déviation de la trajectoire vers une position incorrecte (Py) décalée transversalement, pour remettre ladite courroie dans une position de consigne (P2), il est prévu d'agencer sur la surface (7) du cylindre, en dessous de la courroie de compactage (R2), au moins un support (H2) d'appui, qui prend une position de correction (KP) asymétrique, décalée dans la direction axiale du cylindre (W) par rapport à la position de consigne (P2) vers la direction (4) opposée à la direction de la tendance de déviation de la trajectoire (5).

2. Presse à balles cylindriques comportant une chambre de formation des balles (CB), munie d'une pluralité de courroies de compactage (R1 à R4) entraînées en rotation, dans laquelle les courroies de compactage (R1 à R4), disposées les unes à côté des autres en laissant une distance intermédiaire, sont guidées autour de cylindres (W) respectivement communs, montés rotatifs, **caractérisée en ce que**, pour le guidage forcé d'au moins une courroie de compactage (R2), présentant par rapport aux courroies de compactage (R1, R3) adjacentes sur le cylindre (W), une tendance de déviation de la trajectoire vers une position incorrecte (Py) décalée transversalement, pour remettre ladite courroie dans une position de consigne (P2), il est prévu, à l'intérieur de la largeur axiale de la zone de contact (7, 13) entre la courroie de compactage (R2) et le cylindre (W), au moins deux zones (A, B) à asymétrie physique due à des propriétés de frottement différentes.

3. Presse à balles cylindriques selon la revendication 1 ou 2, **caractérisée en ce que** la position de correction (KP) asymétrique du support (H2) ou la position axiale d'au moins une zone (A, B) peuvent être réglées au moins une fois.

4. Presse à balles cylindriques selon la revendication 1 ou 2, **caractérisée en ce que** la largeur axiale du support (H2) ou d'au moins une zone (A, B) peut être réglée au moins une fois.

5. Presse à balles cylindriques selon la revendication 3, **caractérisée en ce que** le support (H2) peut être réglé par paliers ou progressivement le long de la surface (7) du cylindre (W).

6. Presse à balles cylindriques selon la revendication 1, **caractérisée en ce que** le support (H2) comporte une surface de contact (F1 à F5), plane, à courbure convexe, trapézoïdale, en forme de toit ou triangulaire, pour la courroie de compactage (R2), laquelle surface est parallèle à la surface (7) du cylindre ou inclinée par rapport à la surface (7) du cylindre et laquelle est lisse ou structurée ou physiquement adhérente.

7. Presse à balles cylindriques selon la revendication 1, **caractérisée en ce que** le support (H2) est une gaine en matière plastique, en métal ou en caoutchouc.

8. Presse à balles cylindriques selon la revendication 1, **caractérisée en ce que** le support (H2) est au moins une bande (8) continue, collée sur la surface (7) du cylindre.

9. Presse à balles cylindriques selon la revendication 8, **caractérisée en ce que** la bande (8) est une bande adhésive.

10. Presse à balles cylindriques selon la revendication 9, **caractérisée en ce que** la bande adhésive a une surface de contact (9) à frottement actif.

11. Presse à balles cylindriques selon la revendication 2, **caractérisée en ce que** les zones (A, B) sont prévues sur la surface (7) du cylindre et/ou sur la face inférieure (13) de la courroie de compactage.

12. Presse à balles cylindriques selon la revendication 11, **caractérisée en ce que** les propriétés de frottement, différentes les unes des autres, des zones (A, B) sont générées par des traitements de surface différents de la surface (7) du cylindre.

13. Presse à balles cylindriques selon la revendication 11, **caractérisée en ce qu'**il est prévu un revêtement (11, 15) adhésif dans au moins une zone (A ou B), et **en ce que** le revêtement (11, 15) possède des propriétés de frottement meilleures ou plus mauvaises que celles de l'autre zone (B ou A).

14. Presse à balles cylindriques selon l'une quelconque des revendications 1 à 13, **caractérisée en ce que** la déviation de la position réelle par rapport à la position de consigne peut être détectée automatiquement et le support ou les deux zones peuvent être influencés automatiquement dans le sens d'une correction.
